# EUROPÄISCHE PATENTANMELDUNG

(11) **EP 4 454 479 A1**
(43) Veröffentlichungstag der Anmeldung: **30.10.2024**
(21) Anmeldenummer: 23169570.1
(22) Anmeldetag: 24.04.2023
(51) Int. Cl.: A23J 3/04, A23K 10/20, A23L 13/00, A23L 33/10

(54) **VERFAHREN ZUR HERSTELLUNG VON INSEKTENPULVER ODER -GRANULAT**

(71) Anmelder: Ingredo GmbH, 69124 Heidelberg (DE)
(72) Erfinder: Ehrler, Josef, 69124 Heidelberg (DE)
(74) Vertreter: Müller-Boré & Partner Patentanwälte PartG mbB

(57) **Zusammenfassung**

Die vorliegende Erfindung betrifft Verfahren zur Herstellung eines Insektenpulvers oder -granulats, entsprechend hergestellte Insektenpulver oder -granulate, und diese enthaltende Nahrungs- oder Futtermittel.

## Beschreibung

Die vorliegende Erfindung betrifft Verfahren zur Herstellung eines Insektenpulvers oder -granulats, entsprechend hergestellte Insektenpulver oder -granulate, und diese enthaltende Nahrungs- oder Futtermittel.

In der heutigen Zeit stellt die intensivierte Landwirtschaft ein nicht unerhebliches Umweltproblem dar. Insbesondere werden durch die Haltung von Nutztieren zur Fleischerzeugung umweltschädliche Gase durch den Ausstoß von Methan und Stickstoffverbindungen aus der tierischen Verdauung erzeugt. Darüber hinaus führt die Ausbringung von stickstoffhaltigen Verbindungen durch Mist und Gülle zu erheblichen Problemen. So wird nicht nur der Nitratgehalt im Grundwasser erhöht, sondern auch das Stickstoffgleichgewicht in der Umwelt gestört. Aus diesem Grund mussten beispielweise die Niederlande als landwirtschaftlastiges Land Tempolimits auf Autobahnen von 100 km/h einführen, um diesen Effekt nicht noch durch verkehrsbedingte Umweltbelastungen zu verschlimmern.

Stickstoff ist zweifellos ein wichtiges Element, da er beispielsweise von Pflanzen für die Proteinbiosynthese benötigt wird. Dennoch ist die Menge an Stickstoff, die in Böden benötigt wird, und die Menge an Stickstoff, die aus der landwirtschaftlichen Haltung von Nutztieren ausgebracht werden muss, nicht verhältnismäßig. Zudem sind die in Mist und Gülle enthaltenen Stickstoffverbindungen ohnehin nicht optimal.

Entsprechende Regulierungsmechanismen durch die Umweltbehörden stoßen dabei auf das Problem, dass mit der Verringerung von Mist und Gülle auch die Tierhaltung reduziert werden müsste. Auf der anderen Seite jedoch benötigt der menschliche Körper den Baustein Lysin als essentielle, erstlimitierende Aminosäure, welche vornehmlich in Fleisch und anderen tierischen Proteinquellen vorkommt. Durch Mangel an Lysin und abnehmenden Verzehr von anderen essentiellen Amino- und Fettsäuren verschlechtert sich der gesundheitliche Zustand des Menschen und auch dessen intellektuelle Fähigkeiten.

Somit sind die wichtigsten essentiellen Aminosäuren bis auf wenige Ausnahmen in tierischem Eiweiß enthalten. Eine pflanzliche Ausnahme stellt dabei Soja dar, was allerdings dem Bestreben, die umweltverträgliche Bilanz zu verbessern, nicht zuträglich ist.

Darüber hinaus ist die Erzeugung von herkömmlichen (tierischen) Proteinen ebenfalls teuer und rohstoffaufwändig. Daher müssen eine erhebliche landwirtschaftliche Fläche sowie hochwertige Rohstoffe eingesetzt werden, so dass in den meisten Fällen leistungssteigernde Zutaten benötigt werden, um die Protein- oder Fleischerzeugung zu optimieren. Somit benötigt ein Rind ca. 6 kg Futter, ein Schwein ca. 3 kg Futter und ein Huhn ca. 1,6 kg Futter je 1 kg Fleisch, das erzeugt werden soll. Das wiederum benötigt einen hohen Proteingehalt der Futterpflanzen und wertvolle Ergänzungen an Vitaminen und anderen Zusatzstoffen.

Nun benötigen auch Nutztiere wie Schweine oder Hühner essentielle Aminosäuren, um ihrerseits Proteinmasse ausbilden zu können. Da seit der BSE-Krise Fleischmehl in der Nutztierhaltung verboten ist, können nur noch Soja oder Fischmehl als Lysin- und Methioninquelle eingesetzt werden. Dabei fördert Soja jedoch die Urwaldrodung und muss aus Brasilien importiert werden, während Fischmehl die Überfischung der Weltmeere fördert und überwiegend aus Chile importiert wird.

Insekten hingegen enthalten eine sehr günstige Verteilung an essentiellen Amino- und Fettsäuren. Dabei benötigen diese nach regulärem Stand der Technik ca. 1,5 kg Futter, je kg Fleisch, was mittlerweile auf ca. 1 kg Futter je kg Fleisch verbessert werden konnte und teilweise bei einigen Landwirten auch schon umgesetzt wird. Da der Wirkungsgrad der Futterverwertung deutlich besser ist als bei herkömmlichen Nutztierarten, ist auch der Anteil an Nebenerzeugnissen und Reststoffen deutlich hochwertiger und geringer.

Trotz großer Anstrengungen stößt die Umsetzung dieser Vorteile jedoch auf große Schwierigkeiten hinsichtlich Herstellung, Haltbarkeit, mikrobiologischer Belastung und Akzeptanz entsprechender Insekten-basierter Futter- und Nahrungsmittel.

Momentan werden zwei Wege zum Herstellen eines Proteinpulvers aus Insektenlarven bestritten.

Beim sogenannten Nassverfahren werden die Larven zu Beginn in Wasser gekocht. Dieser Schritt dient dem Hygienisieren der Larven. Daraufhin werden diese in einem Dekanter oder einer Ölpresse ausgepresst und die Wasserfraktion, die Ölfraktion und die Feststofffraktion voneinander getrennt. Die Wasserfraktion wird je nach Qualität noch von Restsubstanzen befreit und ins Abwasser geleitet. Die Ölfraktion muss ebenfalls nochmals bearbeitet werden, da sie ebenfalls nicht 100% Öl enthält, beispielsweise durch Zentrifugation oder Filtrierung. Die Feststofffraktion wird nun mittels eines Trockners von Restfeuchtigkeit bei meist ca. 60°C befreit. Bei diesem Verfahren erhält man in der Regel vier Fraktionen. Die Öle, die Hautreste, das Proteinpulver und das Wasser. Die Qualität des Proteinpulvers ist meist eher gering, mit grau-brauner Farbe und fischigem Geruch. Weiter sind Teile der essentiellen Aminosäuren der Rohlarven nicht mehr enthalten und der Proteingehalt liegt nur bei ca. 58%. Das Proteinpulver ist sehr reaktiv mit Luftsauerstoff, wodurch es sich schnell verfärbt und unangenehme Gerüche bildet. Der Geschmack ist sehr säuerlich. Wenn man die Öle zu dem Proteinpulver dazugibt, entsteht eine klebrige Masse. Allerdings geht dabei die positive Eigenschaft der Haltbarmachung durch bestimmte, in den Rohlarven enthaltene Ölsäuren verloren und das Öl ist nicht mehr so hochwertig wie in den Laborwerten der Rohlarven. Die Haut hat eine hellbeige Farbe mit hohem Cellulosegehalt.

Beim Trockenverfahren werden die Larven meist zuerst gekocht, um diese zu hygienisieren, und dann bei geringer Hitze getrocknet. Daraufhin wird meist mit einem Dekanter oder einer Ölpresse entölt. Dabei entsteht ein Ölanteil und ein Trockenanteil. Der Ölanteil enthält meist auch Proteine und Schwebeteilchen. Der Trockenanteil weist meist sehr extreme Gerüche auf und hat Teile seiner Aminosäuren verloren. Der Proteingehalt ist meist bei 53% bei dunkelgrauer Farbe.

Somit liegt der vorliegenden Erfindung die Aufgabe zugrunde, anwendbare und Konsumenten-freundliche Produkte auf Basis von Insekten, die als Futter- oder Nahrungsmittel vermarktet werden können, sowie Verfahren zu deren Herstellung bereitzustellen.

Diese Aufgabe wird durch die in den Ansprüchen gekennzeichneten Ausführungsformen gelöst. Insbesondere werden erfindungsgemäße Verfahren zur Herstellung eines Insektenpulvers oder -granulats, entsprechend hergestellte Insektenpulver oder -granulate, und diese enthaltende Nahrungs- oder Futtermittel bereitgestellt.

Dementsprechend betrifft ein Gegenstand der vorliegenden Erfindung ein Verfahren zur Herstellung eines Insektenpulvers oder -granulats, umfassend den Schritt der Wärmebehandlung von Insektenlarven bei einer Temperatur von 100°C bis 400°C für eine Dauer von 10 Minuten oder weniger und 10 Sekunden oder mehr, wodurch die Insektenlarven gleichzeitig getrocknet und pasteurisiert werden.

Bevorzugt umfasst dieses Verfahren die Schritte:
(a) Bereitstellen von Insektenlarven,
(b) Wärmebehandlung der in Schritt (a) bereitgestellten Insektenlarven bei einer Temperatur von 100°C bis 400°C für eine Dauer von 10 Minuten oder weniger und 10 Sekunden oder mehr, wodurch die Insektenlarven gleichzeitig getrocknet und pasteurisiert werden, und
(c) Vermahlen oder Granulieren der in Schritt (b) erhaltenen wärmebehandelten Insektenlarven.

Die in Schritt (a) des erfindungsgemäßen Verfahrens bereitgestellten Insektenlarven können jegliche Insektenlarven oder Mischungen aus Insektenlarven sein, die für die Herstellung eines Insektenpulvers oder -granulats zur Verwendung als Nahrungs- oder Futtermittel geeignet sind. In bevorzugten Ausführungsformen sind die Insektenlarven ausgewählt aus der Gruppe, bestehend aus Fliegenlarven (*Brachycera*), Larven von Vorratsschädlingen, Grillenlarven (*Grylloidae*) und Mischungen daraus. Dabei umfasst der Begriff "Vorratsschädlinge" beispielsweise Brotkäfer, Dörrobstmotten, Erbsenkäfer, Erdnusssamenkäfer, Gemeine Speckkäfer, Getreidekapuziner, Getreidemotten, Speichermotten, Getreideplattkäfer, Große Reismehlkäfer, Khaprakäfer, Kleine Tabakkäfer, Kornkäfer, Kornmotten, Maiskäfer, Mehlkäfer, Reiskäfer, Rotbraune Leistenkopfplattkäfer, Türkische Leistenkopfplattkäfer, Rotbraune/Amerikanische Reismehlkäfer, Schwarze Getreidenager, Speisebohnenkäfer und Vorratsmilben. In besonders bevorzugten Ausführungsformen sind die Insektenlarven ausgewählt aus der Gruppe, bestehend aus Larven der Schwarzen Soldatenfliege (*Hermetia illucens*), Larven des Mehlkäfers (*Tenebrio molitor*), Larven des Reismehlkäfers (*Tribolium castaneum*), Larven des Heimchens (*Acheta domesticus*) und Mischungen daraus.

Bevorzugt werden die in Schritt (a) des erfindungsgemäßen Verfahrens bereitgestellten Insektenlarven zuvor gewaschen. Verfahren zum Waschen von Insektenlarven unterliegen keinerlei besonderen Beschränkungen und sind im Stand der Technik bekannt. Geeignete Verfahren umfassen beispielsweise ein Waschen mit Wasser, Luft, Gasen, Bürsten oder Reibteilen. In speziellen Ausführungsformen wird kaltes Wasser mit einer Temperatur von 8°C oder weniger, bevorzugt 6°C oder weniger, 4°C oder weniger, 2°C oder weniger, oder 0°C verwendet. Damit werden die Larven von Oberflächenverschmutzung befreit und gleichzeitig in Tiefschlaf versetzt.

Bevorzugt werden die Insektenlarven nach Schritt (a) und vor Schritt (b) des erfindungsgemäßen Verfahrens abgetötet. Dies kann in Form einer Stickstoff-, Druck-, Gas- oder Wärmeentwesung, wie im Stand der Technik bekannt, vorgenommen werden. In einer besonderen Ausführungsform erfolgt die Abtötung der Insektenlarven dagegen erst durch die Wärmebehandlung in Schritt (b) des erfindungsgemäßen Verfahrens.

In bestimmten Ausführungsformen umfasst das erfindungsgemäße Verfahren weiter einen Schritt der mechanischen Wasserreduzierung mittels einer Ölpresse, Zentrifuge, Filterpresse, Schneckenpresse und/oder eines Dekanters vor Schritt (b). Verfahren zur mechanischen Wasserreduzierung unterliegen dabei keinerlei besonderen Beschränkungen und sind im Stand der Technik bekannt. Vorzugsweise wird der Wassergehalt der Larven in diesem Schritt um 30% oder weniger, 40% oder weniger, oder 50% oder weniger reduziert, wobei eine Reduktion des Wassergehalts um mehr als 50% vermieden werden sollte. So wird beispielsweise bei Larven mit einem typischen Wassergehalt von etwa 70% (w/w) der Wassergehalt so reduziert, dass nach diesem Schritt der Wassergehalt der Larven bei etwa 50% (w/w), etwa 40% (w/w), oder etwa 35% (w/w) liegt.

In bestimmten Ausführungsformen wird in dem genannten Schritt der mechanischen Wasserreduzierung gleichzeitig in den Larven enthaltenes Öl entfernt. Der Ölgehalt der Larven nach diesem Schritt soll dabei bei etwa 12% (w/w) oder weniger, bevorzugt 10% (w/w) oder weniger, mehr bevorzugt 8% (w/w) oder weniger, mehr bevorzugt 5% (w/w) oder weniger liegen. Dabei kann der Ölbestandteil beispielsweise durch Tellerseparatoren vom Wasserbestandteil getrennt werden. Weiter kann das Öl entweder wieder den Larven zugesetzt oder als eigenständiges Enderzeugnis behandelt werden.

In Schritt (b) des erfindungsgemäßen Verfahrens erfolgt eine Wärmebehandlung der in Schritt (a) bereitgestellten Insektenlarven bei einer Temperatur von 100°C bis 400°C für eine Dauer von 10 Minuten oder weniger und 10 Sekunden oder mehr, wodurch die Insektenlarven gleichzeitig getrocknet und pasteurisiert werden. Diese Wärmebehandlung erfolgt bevorzugt bei einer Temperatur und für eine Dauer, die zu einer Restfeuchtigkeit der Insektenlarven von 20% (w/w), bevorzugt 18% (w/w) oder weniger, mehr bevorzugt 15% (w/w) oder weniger, mehr bevorzugt 12% (w/w) oder weniger, mehr bevorzugt 10% (w/w) oder weniger, beispielsweise etwa 8% (w/w), führt. Entsprechende Resultate lassen sich durch geeignete Wahl der Temperatur und Dauer der Wärmebehandlung erzielen.

Dabei kann die Wärmebehandlung auch bei einem auf- oder absteigenden, stufenförmigen oder kontinuierlichen Temperaturgradienten im Bereich von 100°C bis 400°C durchgeführt werden. Dies kann beispielsweise in Form eines sechsstufigen, absteigenden Temperaturgradienten von 280°C bis 120°C erfolgen.

In bevorzugten Ausführungsformen wird die Wärmebehandlung in Schritt (b) bei einer Temperatur von 120°C oder höher, 140°C oder höher, 160°C oder höher, 180°C oder höher, oder 200°C oder höher, beispielweise bei etwa 220°C durchgeführt, wobei eine maximale Temperatur von 400°C, bevorzugt 380°C, mehr bevorzugt 360°C nicht überschritten werden sollte.

Die Dauer der Wärmebehandlung in Schritt (b) beträgt bevorzugt 10 Minuten oder weniger, 6 Minuten oder weniger, 4 Minuten oder weniger, 3 Minuten oder weniger, 2 Minuten oder weniger, oder 1 Minute oder weniger, wobei die Dauer von 10 Sekunden, bevorzugt eine Dauer von 30 Sekunden, nicht unterschritten werden sollte.

Geeignete Kombinationen von Temperaturen und/oder Temperaturgradienten und entsprechenden Trocknungszeiten (Dauer der Wärmebehandlung) können vom Fachmann ohne weiteres gewählt werden und führen bevorzugt zu den vorstehend definierten Restfeuchtigkeiten. Dabei bedingen höhere Trocknungstemperaturen kürzere Trocknungszeiten und umgekehrt.

Somit entsteht beispielsweise im Fall von Insektenlarven, die einen Wassergehalt von 65 bis 70% (w/w) aufweisen, eine Trocknungszeit von etwa 90 Sekunden bei einem absteigenden Temperaturgradienten von 380°C auf 120°C. Bei einem ansteigenden Temperaturgradienten von 320°C auf 120°C beträgt die entsprechende Trocknungszeit schon 110 Sekunden. Diese Angaben variieren erfahrungsgemäß mit der Wahl der Trocknungsmaschine und auch mit der Behandlungslänge der Maschine. Kommt in der Maschine Kühlluft zum Einsatz, dann muss die Dauer oder die Temperatur erhöht werden, da die Kühlenergie entsprechend minimiert wird.

Verfahren zur Wärmebehandlung/Trocknung von Insektenlarven unterliegen keinerlei besonderen Beschränkungen und sind im Stand der Technik bekannt. Gleiches gilt für in solchen Verfahren einsetzbare Vorrichtungen. Insbesondere können hier jegliche Trocknervarianten eingesetzt werden, die eine höhere Einbringungstemperatur als 120°C, bevorzugt eine höhere Einbringungstemperatur als 130°C, 180°C oder 200°C, aufweisen und die Produktteilchen ununterbrochen bewegen.

Geeignete Verfahren umfassen beispielsweise die Wärmebehandlung mittels eines Planetwalzenextruders oder eines Dünnschichttrockners. Als Alternative zu einem Planetwalzenextruder können dabei auch Multiwellen-, Doppelwellen- oder Einwellenextruder eingesetzt werden, sofern diese Entgasungszonen und Mantel- oder Wellenheizkörper aufweisen. Weiter können auch Mühlentrockner, Scheibentrockner, Röhrentrockner, Trommeltrockner, Fließbetttrockner, Bandtrockner, Mikrowellenscheibentrockner oder Wirbelschichttrockner eingesetzt werden. Grundsätzlich sind alle möglichen Trocknervarianten einsetzbar, welche einen drehenden Rotor und eine entsprechende Außenhülle aufweisen. Auch Trocknervarianten, die das Produkt mit Luftströmen bewegen, sind hier einsetzbar.

Wie vorstehend beschrieben, können in diesem Zusammenhang auch Dünnschichttrockner verwendet werden. Allerdings entsteht hier der Nachteil, dass die Trocknungsenergie durch die Durchströmungsluft deutlich erhöht wird. Zudem trennt sich im Verfahren Haut und Larvenrest, der anschließend weiterbearbeitet werden muss. Bei diesen Maschinen handelt es sich um Durchlauftrockner, die durch einen schnellläufigen Rotor das Trocknungsgut durch die Trocknungszone fördern und durch eine kurze Behandlungszeit und dabei die Möglichkeit einer höheren Behandlungstemperatur von mehr als 100°C gekennzeichnet sind. Diese können auch mit luftabschließenden Gasen wie Stickstoff oder Helium betrieben werden. Es ist auch möglich, diese Rotorentrockner im Batch-Verfahren oder im Vakuum zu betreiben.

Bei herkömmlichen Varianten der Wärmebehandlung/Trocknung werden meist Maschinen verwendet, die eine geringe Temperatur aufweisen und dabei entweder eine lange Behandlungsdauer oder einen geringen Durchsatz haben. Somit werden meistens im gängigsten Ausführungsmodell Bandtrocknungsmaschinen eingesetzt, beispielsweise Mikrowellenscheibentrockner oder Mühlentrockner nach dem Trocknungsrotorprinzip.

Planetwalzenextruder sind beispielsweise aus dem Hause Entex oder Battenfeld-Cincinetti bekannt. Weiter sind Dünnschichttrockner beispielsweise aus dem Hause Vomm, SMS-Buss-Canzler oder auch GIG-Karasek bekannt. Weiter sind Mühlentrocknervarianten, wie etwa der Ultra-Rotor der Firma Jäckering oder bauähnliche Varianten aus dem Hause Hosokawa-Alpine, Giesinger oder Pallmann bekannt.

In Schritt (c) des erfindungsgemäßen Verfahrens werden die in Schritt (b) erhaltenen wärmebehandelten Insektenlarven vermahlen oder granuliert. Verfahren zur Vermahlung oder Granulierung der Insektenlarven unterliegen dabei keinerlei besonderen Beschränkungen und sind im Stand der Technik bekannt. Diese umfassen beispielsweise den Einsatz einer Universalmühle, Stiftmühle, Turbomühle, Messermühle, Schlagkreuzmühle, Hammermühle, eines Walzenstuhls oder einer Scheibenmühle. Ebenfalls können mit einem Planetwalzenextruder sehr gute Ergebnisse erzielt werden. Dementsprechend erfolgt in einer besonderen Ausführungsform sowohl Schritt (b) als auch Schritt (c) des erfindungsgemäßen Verfahrens mittels eines Planetwalzenextruders. Als Alternative zu einem Planetwalzenextruder können dabei auch Multiwellen-, Doppelwellen- oder Einwellenextruder eingesetzt werden, sofern diese Entgasungszonen und Mantel- oder Wellenheizkörper aufweisen. Weiter können hier auch Walzsysteme oder Pelletpressen wie Ring- oder Flachmatritzenpressen eingesetzt werden.

Die Teilchengröße des erfindungsgemäß hergestellten Insektenpulvers oder - granulats beträgt im Falle eines Pulvers bevorzugt 500 µm oder weniger, mehr bevorzugt 200 µm oder weniger, 150 µm oder weniger oder 75 µm oder weniger. Im Falle eines Granulats beträgt die Teilchengröße mehr als 500 µm, bevorzugt 1 mm oder mehr, 2 mm oder mehr, 3 mm oder mehr oder 5 mm oder mehr. Verfahren zur Bestimmung der Teilchengröße eines Pulvers oder Granulats sind im Stand der Technik bekannt.

In bestimmten Ausführungsformen umfasst das erfindungsgemäße Verfahren weiter einen Schritt des Entölens des erhaltenen Insektenpulvers oder -granulats nach Schritt (c). Verfahren zur Entölung unterliegen dabei keinerlei besonderen Beschränkungen und sind im Stand der Technik bekannt. Bevorzugt beträgt der Ölgehalt des erhaltenen Produkts nach diesem Schritt 25 bis 20% (w/w), mehr bevorzugt 20 bis 15% (w/w) oder 15 bis 10% (w/w).

In bevorzugten Ausführungsformen enthält das erfindungsgemäß hergestellte Insektenpulver oder -granulat
(i) weniger als 10 KBE/g (Kolonie-bildende Einheiten pro Gramm) *Clostridium perfringens,*
(ii) weniger als 100 KBE/g *Enterobactericeae* sp., und/oder
(iii) keine nachweisbaren Salmonellen (*Salmonella* sp.).

Weiter enthält das erfindungsgemäß hergestellte Insektenpulver oder -granulat bevorzugt
(iv) keine nachweisbaren Pestizide,
(v) keine nachweisbaren Viren,
(vi) weniger als 0,15 mg/kg Blei,
(vii) weniger als 0,05 mg/kg Cadmium, und/oder
(viii) weniger als 0,05 mg/kg Quecksilber.

Verfahren zur Bestimmung entsprechender Mikroorganismen in dem Insektenpulver oder -granulat sind, ebenso wie Verfahren zur Bestimmung von Pestiziden, Viren, Blei, Cadmium und Quecksilber in dem Insektenpulver oder -granulat, im Stand der Technik bekannt.

Ein weiterer Gegenstand der vorliegenden Erfindung betrifft ein Insektenpulver oder - granulat, welches durch das erfindungsgemäße Verfahren erhalten worden ist.

Dabei treffen alle relevanten, für das erfindungsgemäße Verfahren definierten Einschränkungen auch auf das erfindungsgemäße Insektenpulver oder -granulat zu. Dies trifft insbesondere für die zugrunde liegenden Insektenlarven, Wasser- und Ölgehalt, Teilchengröße und mikrobiologische Eigenschaften zu.

Ein weiterer Gegenstand der vorliegenden Erfindung betrifft ein Nahrungs- oder Futtermittel, enthaltend das erfindungsgemäße Insektenpulver oder -granulat. Geeignete Nahrungs- oder Futtermittel unterliegen keinen besonderen Beschränkungen und umfassen beispielsweise Schweinefutter, Fischfutter, Geflügelfutter, Hundefutter, Katzenfutter, Hasenfutter, Kaninchenfutter, Nagerfutter, Proteinshakes, Hackfleischersatz, und Fleisch- und Wurstersatz.

Der Begriff "etwa" wie hierin verwendet, stellt einen Modifikator des spezifizierten Werts von ± 10%, bevorzugt ± 9%, ± 8%, ± 7%, ± 6%, ± 5%, ± 4%, ± 3%, ± 2%, ± 1,5%, ± 1% oder ± 0,5% dar. Somit bezeichnet beispielsweise die Wendung "etwa 100" einen Wertebereich von 90 bis 110.

Die vorliegende Erfindung stellt Verfahren zur Herstellung eines Insektenpulvers oder -granulats, entsprechend hergestellte Insektenpulver oder -granulate, und diese enthaltende Nahrungs- oder Futtermittel bereit.

Üblicherweise werden Insektenlarven lebend, gefroren oder frisch (tot) verfüttert oder vermarktet. In zoologischen Fachmärkten werden beispielsweise lebende Insekten, deren Larven oder auch konservierte Tiere angeboten. In der Nutztierhaltung wurde die Fütterung von lebenden Futtertieren erheblich eingeschränkt. Darum müssen diese mittlerweile fachgerecht und ethisch getötet werden, um diese verfüttern zu dürfen. Getötete Tiere sind jedoch nur sehr kurz haltbar und daher kaum zu vermarkten. Zudem ist der hohe Wasseranteil ein wirtschaftliches Problem, da je kg Larve ca. 70% Wasser verfüttert und damit auch transportiert werden müssen. Um diesen aufgeführten Beispielen entgegenwirken zu können, müssen die Larven als Trockensubstanz mit maximal 20% (w/w) Feuchtigkeit, bevorzugt maximal 15% (w/w) angeboten werden.

Die Haltbarkeit der Larven ist nicht nur durch deren Wassergehalt sehr begrenzt. Auch die mikrobiologische Zusammensetzung ist dabei sehr ungünstig, denn wie Fleisch können die Larven schnell gefährliche Substanzen enthalten oder ausbilden. Darum müssen die Larven nicht nur getrocknet, sondern auch pasteurisiert werden. Die mikrobiologische Belastung muss dabei minimiert oder auch deaktiviert werden können. Das kann durch mehrere Wege geschehen, beispielsweise durch eine hohe Trocknungstemperatur etwa über 90°C, 110°C, 125°C, oder 150°C, durch angewendete Drücke von 1 bar, 5 bar, 10 bar, oder 20 bar, durch den Einsatz von chemischen Zusatzstoffen oder Zutaten, beispielsweise Salzverbindungen wie Calciumchlorid, Natriumchlorid und Natriumnitrit (E250), Natriumnitrat und Kaliumnitrat (E251 und E252), Sorbinsäure und Sorbate (E200 bis E203), Benzoesäure und Benzoate (E210 bis E213), alle möglichen Säuren und Basen wie Wein (und Weinsäure), Zitronen (und Zitronensäure), Essig (und Essigsäure), Ameisensäure sowie alle wasserregulierenden oder die Wasseraktivität (aw-Wert)-senkenden Substanzen, wie Guarkernmehl, Xanthan, Johannesbrotmehl und auch Gerbstoffe.

Darüber hinaus spielt die Farbe im Enderzeugnis bei Futter- und Nahrungsmitteln eine entscheidende Rolle. Hier ist jedoch in den Larven ein Enzym vorhanden, das die Larven nach der Tötung und einer Zerstörung der Oberfläche schwärzlich färbt. Da eine schwarze Farbe eines Nahrungsmittels eine Farbänderung durch Pigmentierung zur Nachahmung von anderen Nahrungsmitteln nicht zulässt, ist eine schwärzliche oder grau-lastige Farbe nicht zuträglich. Zudem vermittelt das Erzeugnis einen "unreinen" oder auch verbrannten Eindruck. Deshalb ist es wichtig, diese enzymatische Aktivität drastisch zu reduzieren. Zur Reduzierung können mehrere Maßnahmen vorgenommen werden.

Die Temperatur beeinflusst die Geschwindigkeit der enzymatischen Reaktionen. Bei hohen Temperaturen werden Enzyme meist denaturiert und verlieren ihre Aktivität. Bei niedrigen Temperaturen werden Enzyme inaktiviert und verlieren ihre Aktivität. Eine Möglichkeit, die enzymatische Aktivität und damit eine Schwarzfärbung zu verringern, ist daher das Erhitzen oder Einfrieren der Nahrungsmittel. Weiter beeinflusst der pH-Wert die Struktur und Funktion der Enzyme. Jedes Enzym hat einen optimalen pH-Wert, bei dem es am besten arbeitet. Zu saure oder zu alkalische pH-Werte können Enzyme denaturieren oder hemmen. Eine Möglichkeit, die enzymatische Aktivität zu verringern, ist daher das Säuern oder Alkalisieren der Nahrungsmittel mit Essig, Zitronensaft, Backpulver oder anderen Säuren oder Basen. Weiter beeinflusst die Wasseraktivität die Verfügbarkeit von Wasser für die enzymatische Reaktion. Je höher die Wasseraktivität ist, desto höher ist auch die enzymatische Aktivität. Eine Möglichkeit, die enzymatische Aktivität zu verringern, ist daher das Trocknen, Dörren, Salzen oder Zuckern der Nahrungsmittel. Schließlich sind Inhibitoren Stoffe, die an das Enzym binden und seine Aktivität reduzieren oder blockieren. Es gibt verschiedene Arten von Inhibitoren, wie zum Beispiel kompetitive Inhibitoren, nichtkompetitive Inhibitoren oder allosterische Inhibitoren. Eine Möglichkeit, die enzymatische Aktivität zu verringern, ist daher das Hinzufügen von Inhibitoren wie Metallionen, Schwefelverbindungen, Phenolen oder anderen natürlichen oder synthetischen Stoffen.

Der Geruch ist für alle Arten des Einsatzes von möglichen Futter- oder Nahrungsmitteln ein entscheidendes Merkmal. Da es sich bei Insektenlarven um einen fleischartigen Stoff handelt, ist dieser Faktor sehr empfindlich und entwickelt sehr rasch sehr unangenehme Gerüche. Da die mikrobiologische sowie enzymatische Zusammensetzung der Larven in dieser Hinsicht ebenfalls sehr ungünstig ist, entwickeln herkömmlich getrocknete Larven unerträgliche und sehr intensive Gerüche. Um diese Gerüche zu minimieren, müssen bestenfalls alle vorstehend aufgeführten Maßnahmen ineinandergreifen. Daher müssen die Larven pasteurisiert und gegebenenfalls auch chemisch nachjustiert werden, um die Geruchbelastung einzugrenzen oder auch zu deaktivieren.

Der Geschmack ist das entscheidendste Merkmal eines jeden Futter- oder Nahrungsmittels und ist im Falle von Insektenlarven von denselben Eigenschaften behaftet wie im Falle des Geruchs. Jedoch ist hier der Eigengeschmack ein weiteres Merkmal, das zu beachten ist, denn Insektenlarven haben in der Regel einen sehr säuerlichen Geschmack. Daher sind pH-regulierende Substanzen nur anwendbar, wenn diese den Eigengeschmack nicht zu sehr intensivieren oder verändern.

Der wichtigste und wirtschaftlich relevanteste Inhaltsstoff von Insekten-basierten Futter- oder Nahrungsmitteln sind Proteine. Daher müssen diese möglichst unbeschadet bleiben, da Proteine bei den hohen Temperaturen einer Pasteurisierung schnell denaturieren/gerinnen. Damit verlieren diese oft ihre Wertigkeit und damit Wirtschaftlichkeit. Darum werden normalerweise proteinhaltige Substanzen bei maximal 60°C getrocknet, da 58°C die Gerinnungstemperatur darstellt.

Hier wurde erfindungsgemäß allerdings festgestellt, dass die Zeit der Trocknung eine entscheidende Rolle spielt. Hier muss ein Gleichgewicht hergestellt werden, da einerseits die Temperatur so hoch sein muss, dass Wasser schnellstmöglich verdunstet wird, was beispielsweise bei 300°C, 250°C, 200°C, 150°C, oder 120°C der Fall ist. Andererseits müssen die Proteine der enthaltenen Enzyme und Mikroorganismen denaturiert werden, jedoch nicht die der wichtigen, darin enthaltenen Aminosäuren und auch der anderen Substanzen.

In diesem Zusammenhang werden beispielsweise bei einer Trocknungstemperatur von 220°C in einem Kontakttrockner mit innenläufigem Rotor hervorragende Ergebnisse erzielt. Hierbei entstehen gleichzeitig Schalenteile als ganze Haut der Larve und ein Pulver der Inhalte (Fleisch). Diese können separiert und verwertet werden. Allerdings muss in der Regel die Haut hier zu einem Pulver weiterverarbeitet und klassiert werden. Dies kann mittels einer Universalmühle (Condux-Netzsch, Pallmann PSKM o.a.) einer Stiftmühle, einer Turbomühle, einer Messermühle, einer Schlagkreuzmühle, einer Hammermühle, eines Walzenstuhls oder einer Scheibenmühle erfolgen. Ebenfalls können mit einem Planetwalzenextruder sehr gute Ergebnisse erzielt werden. Dieser bietet weitere Vor-, aber auch Nachteile. Hier wird die Haut zwar nicht separiert, jedoch wird die Energie besser eingeleitet, da ein Planetwalzenextruder höhere Oberflächen aufweist. Zudem kann er nach Zonen und Energieeintrag eingestellt werden und auch die Trocknungszeit sowie die Intensität ist variabel. Auch kann das Produkt direkt zu Granulat, Tierfutter oder auch Nahrungsmittel granuliert werden. Auch die Herstellung von Pulvern ist möglich, wobei diese jedoch noch durch eine Mühle vermahlen werden müssen. Nach der Behandlung in einem Planetwalzenextruder oder Kontakttrockner ist eine Kühlung notwendig. Diese erfolgt über eine Unterwasserkühlung, Strangkühlung, Luftkühlung, Bandkühler, Kastenkühler, Klappenkühler, Dächerkühler oder auch über Abscheider-Zyclonkühlung.

Als Trockner ist auch ein Gefriertrockner möglich. Dieser trocknet in der Regel bei Temperaturen unter dem Gefrierpunkt. Gefriertrocknung bringt zwar sehr gute Grundergebnisse, jedoch löst diese die Probleme der mikrobiologischen Eigenschaften nicht. Zudem ist sie sehr unwirtschaftlich und teuer. Auch Vakuumtrockner können in dieser Hinsicht verwendet werden, sofern diese bei höheren Temperaturen als 90°C, 110°C, 130°C oder 150°C trocknen. Allerdings sind Vakuumtrockner deutlich energieaufwändiger und teurer.

Als Planetwalzenextruder können auch Doppelwellen- oder Einwellenextruder eingesetzt werden, sofern diese Entgasungszonen und Mantelheizkörper besitzen. Hier ist die Funktion sehr ähnlich der des Planetwalzenextruders.

Eine Grundreinigung ist qualitativ essentiell, da die Larven in ihrem eigenen Kot vermischt mit Futter gemästet werden. Das Hygieneaufkommen bei den Landwirten ist zudem nicht sehr hoch. Daher müssen die Larven gewaschen werden. Dies erfolgt in der Regel mit Wasser, Luft, Gasen, Bürsten oder Reibteilen. Als Wasser kann zum Einschläfern der Larven Eiswasser mit 8°C, 6°C, 4°C, 2°C oder 0°C verwendet werden. Damit werden die Larven von Oberflächenverschmutzung befreit und gleichzeitig in Tiefschlaf versetzt. Gleichzeitig kann mit Reibteilen wie Bürsten o.ä. unterstützt werden. Das Abwasser kann nun gefiltert und abgeleitet werden.

Derselbe Effekt kann auch mittels Kaltluft erzielt werden. Hier kann anhand des Gefrierpunktes sogar deutlich kältere Luft, beispielsweise bei 0°C, -5°C, -15°C, -20°C oder -25 °C verwendet werden.

Zur Tötung der Insektenlarven kann eine Stickstoff-, eine Druck-, eine Gas- oder eine Wärmeentwesung vorgenommen werden. Bei einer Stickstoffentwesung wird die betäubte Larve durch weitere Kälteeinwirkung getötet. Bei einer Druckentwesung wird durch eine schlagartige Über- oder Unterdruckveränderung von mindestens 5 bar, 10 bar, 15 bar, 20 bar oder 25 bar die Larve getötet. Bei der Verwendung von Gas wird die Larve mittels Erstickens oder chemische Abtötung durch Gifte getötet. Eine thermische Tötung könnte im Rahmen einer Trocknung erfolgen, da die Insekten keinerlei Kühlmechanismen des Körpers durch beispielsweise Schwitzen aufweisen. Darum sterben diese bereits ab 58°C.

In der vorliegenden Erfindung wurde überraschenderweise festgestellt, dass Insektenlarven für kurze Dauer bei wesentlich höheren Temperaturen als bisher üblich getrocknet werden können. Dabei werden die Insektenlarven neben der Trocknung gleichzeitig pasteurisiert, was vorteilhafte mikrobiologische Eigenschaften erlaubt. Weiter werden dabei Enzyme, die eine nachteilige Färbung des erhaltenen Produkts bewirken könnten, sowie bakterielle Proteine denaturiert, während die Insektenlarvenproteine als solche unbeschadet bleiben. Dies ermöglicht ein Produkt mit ansprechender Farbe, gutem Geruch und gutem Geschmack, guter Haltbarkeit, sowie einer vorteilhaft unveränderten Aminosäurezusammensetzung gegenüber den eingesetzten Rohlarven.

Das erfindungsgemäße Verfahren führt dabei nicht nur zu einer Verminderung pathogener Verunreinigungen, sondern pasteurisiert das Produkt darüber hinaus. Damit wird das Produkt nicht nur haltbarer gemacht, sondern es werden auch pathogene Keime abgetötet, ohne die enthaltenen Proteine zu schädigen. Dabei verringert das Verfahren zudem die Belastung an Schadstoffen wie Schwermetallen, Radionukliden, Pestiziden, Mykotoxinen und anderen schädlichen Substanzen.

Nach dem Trocknungsprozess kann eine Granulierung vorgenommen werden. Dies geschieht durch Extruder wie Einwellen-, Doppelwellen- oder Mehrwellenextruder sowie dem Planetwalzenextruder. Aber auch durch Walzsysteme oder Pelletpressen wie Ring- oder Flachmatritzenpressen kann eine Granulierung vorgenommen werden. Dabei werden die getrockneten Larven in eine beliebige Form gebracht, was einige Vorteile bietet. Zum Beispiel wird die Futteraufnahme und Futterverwertbarkeit von Tieren erhöht und auch die Verdaulichkeit verbessert. Die Lagerfähigkeit und Haltbarkeit werden damit erheblich modifiziert. Auch die sichere Verarbeitbarkeit ist bei Kunden meist nur durch Granulat gewährleistet. Zudem verringert es das Explosionsrisiko, da keine/weniger Schwebeteilchen entstehen.

Nach der Bearbeitung kann zudem ein Kühler eingesetzt werden. Bei einem Kühler wird das Endprodukt nicht nur auf eine geeignete Temperatur gebracht. Durch das Kühlen der Trocknungs- oder Granulierprodukte wird die Haltbarkeit durch die Verringerung der Feuchtigkeit verbessert, die Lagerfähigkeit durch Erhöhung der Fließeigenschaften gewährleistet und auch die Granulatstabilität sichergestellt.

Die vorliegende Erfindung wird anhand der folgenden, nicht-einschränkenden Beispiele näher erläutert.

### Beispiele

### Beispiel 1:

Bei einem ersten Versuch wurden Rohlarven gewaschen und mittels Dünnschichttrockner der Firma Vomm (Turbo-Technology ES900) bei 220°C für eine effektive Trocknungszeit von 20 Sekunden getrocknet. Dabei wird die Larve mittels Dosierung in einen Zylinder geschleust. Darin befindet sich ein sich drehender Rotor, der mittels Frequenzumformer in der Drehzahl gesteuert werden kann, um die Durchlaufzeit zu regulieren. Dabei werden die Larven erfasst, an die mit 220°C beheizte Wand des Trocknerzylinders gedrückt und zu einer gleichmäßigen Schicht aufgetragen. Durch die entstandene Luft des Rotors wird der entstehende Wasserdampf abgesaugt. Sobald diese Schicht den Trockner durchlaufen hat, wird ein trockenes Pulver des Larveninneren sowie die ganze Haut der einzelnen Larven ausgeschleust. Zeit und Temperatur wurden so eingestellt, dass eine Ausgangsfeuchtigkeit von ca. 14% (w/w) entstand.

Ergebnis/Eigenschaften des erhaltenen Produkts:
- Farbe: hellbeige, hellbraun
- Geruch: Schokolade, Kokosnuss
- Geschmack: angenehm, leicht säuerlich
- Proteingehalt 47% (w/w) in der Trockenmasse
- Aminosäurezusammensetzung: unverändert zur Rohlarve
- Feuchtigkeitsgehalt: 14% (w/w)
- Ölgehalt: 20% (w/w) in der Trockenmasse
- Konsistenz: Pulver und flockige Haut

Es wurden daraufhin mit dem erhaltenen Produkt Tests zur Granulierbarkeit mittels Einwellenextruder, Zweiwellenextruder und Pelletpresse gemacht. Zudem wurde ein Hundefutter hergestellt.

Ergebnis/Eigenschaften des erhaltenen Produkts:
- Konsistenz: stabiles Granulat
- Verbesserter Durchsatz im Vergleich zu anderen Pulvern
- Hundefutter aus 100% Larven wurde von allen getesteten Hunden sehr gut akzeptiert

Es wurde daraufhin ein Mahlversuch mittels Universalmühle zum Zerkleinern der Haut unternommen.

Ergebnis/Eigenschaften des erhaltenen Produkts:
- Konsistenz: feines Pulver
- Hellbeige Farbe des Gesamtpulvers
- Gleichbleibende Qualität

### Beispiel 2:

Bei einem zweiten Versuch wurden Rohlarven gewaschen und mittels Planetwalzenextruder der Firma Entex (TP/WE 70/800 M2 RG) bei 220°C für eine effektive Trocknungszeit von 30 Sekunden getrocknet. Dabei wird die Larve mittels Dosierung in einen Extruder mit einer Planetwellentechnologie geschleust. Darin befindet sich ein sich drehender Rotor, der mittels Frequenzumformer in der Drehzahl gesteuert werden kann, um die Durchlaufzeit zu regulieren. Dabei werden die Larven erfasst, an das mit 220°C beheizte Gehäuse des Extruders mittels Planetwalzenwelle gedrückt und geknetet. Durch die unterschiedlichen Zonen des Extruders wird der entstehende Wasserdampf abgesaugt und die Temperaturen abfallend eingestellt. Zeit und Temperatur wurden so eingestellt, dass eine Ausgangsfeuchtigkeit von ca. 14% entstand. Am Ende des Extruders kann ein Auslaufwerkzeug eingelegt werden, das die Konsistenz und auch den Extruderdruck einstellt. Dabei kann ein Granulat oder auch, ohne Einlegen eines Werkzeugs, ein Pulver hergestellt werden. Durch Anschließen einer Strangkühlung wird bei der Granulation das Endprodukt sogar gekühlt.

Es können auch weitere Rohstoffe als Zutat einer Rezeptur am Ende oder in der Mitte zugeschleust werden, um ein Futter oder Enderzeugnis herstellen zu können.

Ergebnis/Eigenschaften des erhaltenen Produkts:
- Farbe: hellbeige, hellbraun
- Geruch: Schokolade, Kokosnuss
- Geschmack: angenehm, leicht säuerlich
- Proteingehalt 47% in der Trockenmasse
- Aminosäurezusammensetzung: unverändert zur Rohlarve
- Feuchtigkeitsgehalt: 14%
- Ölgehalt: 20% in der Trockenmasse
- Konsistenz: Pulver oder Granulat

Beide Versuchsprodukte können nun auch entölt werden, um ein entöltes Proteinkonzentrat mit mindestens 50% Proteingehalt und verbessertem Geruch, Geschmack, Hygiene, Haltbarkeit und Farbe und erhöhtem Aminosäuregehalt zu erhalten.

### Beispiel 3:

Bei einem dritten Versuch wurden Rohlarven mit einem Wasseranteil von 68% gewaschen und mittels Zentrifuge der Firma Flottweg (Trikanter) bei 80°C mechanisch entwässert. Das entstandene Presswasser wurde mittels Scheibenseparator in Öl und Wasser getrennt. Das Wasser wurde abgeleitet und das Öl separiert betrachtet.

Das Trockengut mit ca. 40% (w/w) Wasseranteil wurde in einem Planetwalzenextruder der Firma Entex (TP/WE 70/800 M2 RG) bei 380°C für eine effektive Trocknungszeit von 20 Sekunden getrocknet. Dabei wird die Larve mittels Dosierung in einen Extruder mit einer Planetwellentechnologie geschleust. Darin befindet sich ein sich drehender Rotor, der mittels Frequenzumformer in der Drehzahl gesteuert werden kann, um die Durchlaufzeit zu regulieren. Dabei werden die Larven erfasst, an das mit 380°C beheizte Gehäuse des Extruders mittels Planetwalzenwelle gedrückt und geknetet. Durch die unterschiedlichen Zonen des Extruders wird der entstehende Wasserdampf abgesaugt und die Temperaturen werden abfallend eingestellt. Zeit und Temperatur wurden so eingestellt, dass eine Ausgangsfeuchtigkeit von ca. 10% (w/w) entstand.

Danach wurde das getrocknete Pulver zusammen mit Stärke und einem Vitamin-Mineralstoffpremix in einem Einwellenextruder der Firma AmandusKahl (OEE8) zu einem 3 mm sowie optional 6 mm dickes Granulat verarbeitet.

Durch Anschließen eines Schubboden- oder Bandkühlers wurde bei der Granulation das Endprodukt gekühlt und in einen abriebfesten Zustand gebracht. Damit wird die Staubbildung bei Lagerung und Transport verhindert und zudem eine gute Haltbarkeit, eine gute Fließeigenschaft sowie eine verbesserte Futteraufnahme durch das Tier gewährleistet.

Es können auch weitere Rohstoffe als Zutat einer Rezeptur am Ende oder in den Planetwalzenextruder oder auch später in den Einwellenextruder zugeschleust werden, um ein Futter oder Enderzeugnis herstellen zu können.

Ergebnis/Eigenschaften des erhaltenen Produkts:
- Farbe: beige/braun
- Geruch: Schokolade
- Geschmack: angenehm, süß
- Proteingehalt 67% (w/w) in der Trockenmasse
- Aminosäurezusammensetzung: unverändert zur Rohlarve
- Feuchtigkeitsgehalt: 10% (w/w)
- Ölgehalt: 8% (w/w) in der Trockenmasse
- Konsistenz: Pulver oder Granulat

## Patentansprüche

1. Verfahren zur Herstellung eines Insektenpulvers oder -granulats, umfassend den Schritt der Wärmebehandlung von Insektenlarven bei einer Temperatur von 100°C bis 400°C für eine Dauer von 10 Minuten oder weniger und 10 Sekunden oder mehr, wodurch die Insektenlarven gleichzeitig getrocknet und pasteurisiert werden.

2. Verfahren nach Anspruch 1, umfassend die Schritte:
(a) Bereitstellen von Insektenlarven,
(b) Wärmebehandlung der in Schritt (a) bereitgestellten Insektenlarven bei einer Temperatur von 100°C bis 400°C für eine Dauer von 10 Minuten oder weniger und 10 Sekunden oder mehr, wodurch die Insektenlarven gleichzeitig getrocknet und pasteurisiert werden, und
(c) Vermahlen oder Granulieren der in Schritt (b) erhaltenen wärmebehandelten Insektenlarven.

3. Verfahren nach Anspruch 1 oder Anspruch 2, wobei die Wärmebehandlung in Schritt (b) bei einer Temperatur und für eine Dauer durchgeführt wird, die zu einer Restfeuchtigkeit der Insektenlarven von 20% (w/w) oder weniger führt.

4. Verfahren nach einem der Ansprüche 1 bis 3, wobei die Wärmebehandlung in Schritt (b) bei einem stufenförmigen Temperaturgradienten von 280°C bis 120°C durchgeführt wird.

5. Verfahren nach einem der Ansprüche 1 bis 4, wobei die Wärmebehandlung in Schritt (b) für eine Dauer von 6 Minuten oder weniger und 10 Sekunden oder mehr, 4 Minuten oder weniger und 10 Sekunden oder mehr, 3 Minuten oder weniger und 10 Sekunden oder mehr, 2 Minuten oder weniger und 10 Sekunden oder mehr, oder 1 Minute oder weniger und 10 Sekunden oder mehr durchgeführt wird.

6. Verfahren nach einem der Ansprüche 1 bis 5, wobei die Wärmebehandlung in Schritt (b) mittels eines Planetwalzenextruders, eines Dünnschichttrockners, eines Multiwellenextriders, eines Doppelwellenextruders, eines Einwellenextruders, eines Mühlentrockners, eines Scheibentrockners, eines Röhrentrockners, eines Trommeltrockners, eines Fließbetttrockners, eines Bandtrockners, eines Mikrowellenscheibentrockners oder eines Wirbelschichttrockners durchgeführt wird.

7. Verfahren nach einem der Ansprüche 1 bis 6, weiter umfassend den Schritt der mechanischen Wasserreduzierung mittels einer Ölpresse, Zentrifuge, Filterpresse, Schneckenpresse und/oder eines Dekanters vor Schritt (b).

8. Verfahren nach einem der Ansprüche 1 bis 7, weiter umfassend den Schritt des Entölens des erhaltenen Insektenpulvers oder -granulats nach Schritt (c).

9. Verfahren nach Anspruch 8, wobei der Ölgehalt nach dem Schritt des Entölens 25 bis 20% (w/w) beträgt.

10. Verfahren nach einem der Ansprüche 1 bis 9, wobei ein erhaltenes Insektenpulver eine mittlere Teilchengröße von 500 µm oder weniger aufweist und
wobei ein erhaltenes Insektengranulat eine mittlere Teilchengröße von mehr als 500 µm aufweist.

11. Verfahren nach einem der Ansprüche 1 bis 10, wobei das erhaltene Insektenpulver oder -granulat
(i) weniger als 10 KBE/g (Kolonie-bildende Einheiten pro Gramm) *Clostridium perfringens,*
(ii) weniger als 100 KBE/g *Enterobactericeae* sp.,
(iii) keine nachweisbaren Salmonellen (*Salmonella* sp.),
(iv) keine nachweisbaren Pestizide,
(v) keine nachweisbaren Viren,
(vi) weniger als 0,15 mg/kg Blei,
(vii) weniger als 0,05 mg/kg Kadmium, und/oder
(viii) weniger als 0,05 mg/kg Quecksilber enthält.

12. Verfahren nach einem der Ansprüche 1 bis 11, wobei die Insektenlarven ausgewählt sind aus der Gruppe, bestehend aus Fliegenlarven (*Brachycera*), Larven von Vorratsschädlingen, Grillenlarven (*Grylloidae*) und Mischungen daraus.

13. Verfahren nach Anspruch 12, wobei die Insektenlarven ausgewählt sind aus der Gruppe, bestehend aus Larven der Schwarzen Soldatenfliege (*Hermetia illucens*), Larven des Mehlkäfers (*Tenebrio molitor*), Larven des Reismehlkäfers (*Tribolium castaneum*), Larven des Heimchens (*Acheta domesticus*) und Mischungen daraus.

14. Insektenpulver oder -granulat, erhalten durch das Verfahren nach einem der Ansprüche 1 bis 13.

15. Nahrungs- oder Futtermittel, enthaltend das Insektenpulver oder -granulat nach Anspruch 14.
